# EUROPEAN PATENT SPECIFICATION

(11) **EP 0 454 273 B1**
(45) Date of publication and mention of the grant of the patent: **14.02.1996**
(21) Application number: 91201307.5
(22) Date of filing: 24.04.1991
(51) Int. Cl.: H04N 1/46

(54) **RGB color database and method for creating same**
RGB-Farbdatenbank und Verfahren zu ihrer Erzeugung
Base de données de couleurs RVB et procédé pour la génération de celle-ci

(30) Priority: 26.04.1990 US 514605
(43) Date of publication of application: 30.10.1991
(73) Proprietor: Bayer Corporation, Pittsburgh, PA 15219-2502 (US)
(72) Inventor: Delabastita, Paul A., Boston MA 02116 (US)
(74) Representative: Ramon, Charles Lucien

(56) References cited:
- EP-A- 0 264 281
- COMPUTER TECHNOLOGY REVIEW. 1985, LOS ANGELES US pages 167 - 175; J. KENNEY: 'CAREFUL COLOR MATCHING MAKES HARDCOPY OUTPUT CONFORM TO CRT DISPLAY'
- PROCEEDINGS OF THE SID. vol. 30, no. 3, 1989, NEW YORK US pages 183 - 190; P. LAIHANEN: 'Optimization of digital color reproduction on the basis of visual assessment of reproduced images'

## Description

The present invention relates to databases in general and, more particularly, to an RGB color database and method for creating same that is useful in color reproduction processes. The present invention is related to the invention described in EP-A-0 454 275 for "Color Seperation Method", filed simultaneously herewith.

In current color reproduction processes, display devices such as CRT color monitors are used to display a color image that ultimately will be printed using cyan, magenta, yellow, and black printing inks. It is well known that the tristimulus values, the color phosphor values of display monitors, and the color gamut of printing inks are not co-extensive when plotted on an X-Y CIE chromaticity diagram. The usefulness of the color display monitor as a press preview device and as an image retouching tool is constrained by the non-coextensiveness of the three color gamuts. Since the gamuts of the color display chromaticity and the printing ink chromaticity are non-coextensive and do not entirely overlap each other, adjustments must be made to provide a suitable relationship between the colors displayed on the monitor and the colors that can be obtained from the printing inks.

It is accordingly a general object of the invention to provide a RGB color database and method for creating the same.

It is a specific object of the invention to provide a color database that establishes a color relationship between the chromaticity gamut of the RGB primaries of the display and the chromaticity gamut of the printing inks.

It is a further object of the invention to define a triangular chromaticity gamut of virtual primaries R', G', and B' that includes both the printable ink chromaticity gamut and the display device chromaticity gamut.

### BRIEF DESCRIPTION OF THE INVENTION

The invention is as set out in the claims.

An RGB color database is created by referencing the chromaticity gamuts of the RGB primaries of the display device and the printable ink chromaticity gamut to a defined triangular chromaticity gamut of virtual primaries R', G', and B'. The triangular chromaticity gamut includes both the printable ink chromaticity gamut and the display device chromaticity gamut. The virtual R', G', B' primaries are located on the respective extensions of the three lines that connect the neutral chromaticity point with the RGB primaries of the display device. The color data is defined in terms of the R', G', B' virtual primaries to produce the RGB color database.

EP-A-0 264 281 discloses a technique for matching a color, applicable to printing a color on paper, which matches a color on a CRT display. To determine quantities of toner, a definition of the original color such as its RGB coordinates, is converted to coordinates in a linear mixing space, such as CIE coordinates, as discussed on page 7 from line 35 off. These coordinates, together with coordinates of the toners, are then used to calculate quantities of toners. However, according to the method of our invention, as discussed below, color data defined in RGB coordinates are preferentially not converted to CIE coordinates, but defined in terms of colors, closely related to the RGB primaries and taking into account the chromaticity gamut for printing ink primaries, used in the reproduction process.

Another prior art document, "Optimization of digital color reproduction on the basis of visual assessment of reproduced images" by P. Laihanen in Proceedings of the SID Vol. 30 No. 3, 1989, New York, US, pages 183-190, is directed to defining the connection between the colorimetric values and RGB values of the color monitor image and CMYK values of the print. This paper describes the compression of the color space of the original image , based on a transformation in a spherical L*, A*, B* space. Unlike this method, as will be discussed below, defining color in terms according to the method of our invention, stays in close relation to the image to be displayed on the color monitor.

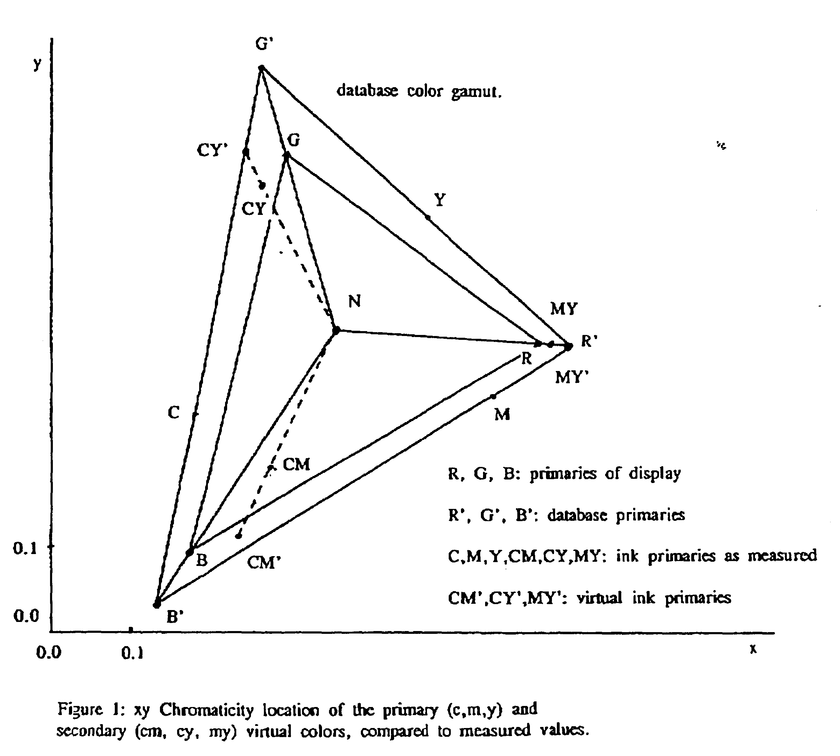

### BRIEF DESCRIPTION OF THE DRAWING

The objects and features of the invention will best be understood from a detailed description of a preferred embodiment thereof, selected for purposes of illustration and shown in the accompanying single figure that illustrates the chromaticity gamut of the RGB primaries of the display device, the chromaticity gamut of the printing inks, and the chromaticity gamut of the virtual R', G', B' primaries of the RGB database in the form of a CIE chromaticity diagram.

### DETAILED DESCRIPTION OF THE INVENTION

Turning now to the single figure, there is shown an XY chromaticity diagram of the CIE type indicating the locations of the R, G, B primaries of the color display device, the C, M, Y, CM, CY, MY primaries of the printing inks as measured, the virtual R', G', B' primaries of the RGB database and the CM', CY', MY' virtual primaries of the printing inks. The primaries of the color display device define a triangle RGB with the neutral chromaticity point thereof indicated in the figure by the letter "N". The chromaticity gamut for the printing inks is the area bounded by the points C, M, Y, CM, CY, and MY.

Virtual database primaries R', G', and B' are defined by extending the three lines that originate from the neutral chromaticity point N and pass through the display primaries R, G, B. The virtual database primaries R', G', and B' define a triangular chromaticity gamut that includes both the chromaticity gamut of the color display (RGB) and the chromaticity gamut of the printing inks (C, M, Y, CM, CY, MY). Although the locations of the database virtual primaries R', G', B' can be located beyond the points indicated in the Figure along each of the extensions of the lines NR, NG, and NB, it is desirable to minimize the area of the triangle defined by the virtual database primaries R', G', and B' in order to achieve a concomitant minimization of the size of the RGB database for a given image. Thus, as shown in the single figure, the triangular chromaticity gamut of the virtual database primaries R', G', and B' includes on its sides the ink primaries C, Y, and M.

It can be seen from an inspection of the single figure that the saturation of the printing ink primaries CM, CY, and MY has been increased without changing the hue of the primaries to create virtual primaries CM', CY', and MY'. The CY' and CM' virtual primaries lie on an extension of the N-CY and N-CM lines as shown by the dashed lines in the single figure. The effect of the increased saturation of the CM, CY, and MY primaries is that calibration can be made to a "virtual" printing process that has a wider saturation gamut than the real printing process. It will be appreciated that, given the increased saturation of the CM, CY, and MY primaries, there is a trade-off that the saturation of colors that have a hue determined by CM, CY, or MY will be slightly reduced. However, this de-saturation is far less objectionable than the hue shifts caused by CMYK clipping of over-saturated colors. A global desaturation for these hues is even preferable over a "projection" technique, where the out-of-saturation gamut colors are projected on the printable saturation gamut since the global desaturation technique preserves the saturation differences. A more detailed discussion of this process using Neugebauer coefficients and a set of "virtual" colors related to the original colors is contained in the above-mentioned related application for "Color Separation Method", the subject matter of which is incorporated herein by reference.

## Claims

1. A method for creating an RGB database for use with color display devices and printing inks, said method comprising the steps of:
A. defining a chromaticity gamut for the R, G, B primaries of a color display device;
B. defining a chromaticity gamut for printing ink primaries;
C. defining a triangular chromaticity gamut of virtual primaries R', G', B' that includes both the printable ink chromaticity gamut and the color display device chromaticity gamut with the virtual R', G', B' primaries being located on the respective extensions of the three lines that connect the neutral chromaticity point with the R, G, B primaries of the color display device chromaticity gamut; and
D. defining color data in terms of said R', G', B' virtual primaries, said defined color data comprising an RGB database.

2. The method of Claim 1 wherein the C, Y, M primaries of the printing ink chromaticity gamut are located within the triangular chromaticity gamut of the R', G', B' virtual primaries.

3. The method of Claim 1 wherein the C, Y, M primaries of the printing ink chromaticity gamut are located on the sides of the triangular chromaticity gamut of the R', G', B' virtual primaries.

4. The method of Claim 1 wherein the saturation of each of the printing ink primaries CM, CY and MY is increased without changing the hue thereof to create virtual printing ink primaries CM', CY' and MY' that are included in the triangular chromaticity gamut of the virtual R', G', B' primaries.

5. The method of Claim 4 wherein the CY' virtual printing ink primary is located on the G' - B' side of the triangular chromaticity gamut of the virtual R', G', B' primaries.

## Patentansprüche

1. Verfahren zur Erzeugung einer RGB-Datenbank zur Verwendung mit Farbanzeigevorrichtungen und Druckfarben, wobei das Verfahren folgende Schritte umfaßt:
A. Definieren einer Farbartengamme für die Primärfarben R, G, B einer Farbanzeigevorrichtung;
B. Definieren eines Farbartengamme für die Primärfarben der Druckfarbe;
C. Definieren einer dreieckigen Farbartengamme der virtuellen Primärfarben R', G', B', die sowohl die druckfähige Farbartengamme der Druckfarbe als auch die Farbartengamme der Farbanzeigevorrichtung einschließt, wobei die virtuellen Primärfarben R', G', B' auf den betreffenden Verlängerungen der drei Linien liegen, die den Weißpunkt mit den Primärfarben R, G, B der Farbartengamme der Farbanzeigevorrichtung verbinden; und
D. Definieren von Farbdaten in Form der virtuellen Primärfarben R', G', B', wobei die definierten Farbdaten eine RGB-Datenbank darstellen.

2. Verfahren nach Anspruch 1, wobei die Primärfarben C, Y, M der Farbartengamme der Druckfarbe innerhalb des Farbartendreiecks der virtuellen Primärfarben R', G', B' liegen.

3. Verfahren nach Anspruch 1, wobei die Primärfarben C, Y, M der Farbartengamme der Druckfarbe auf den Seiten des Farbartendreiecks der virtuellen Primärfarben R', G', B' liegen.

4. Verfahren nach Anspruch 1, wobei die Sättigung jeder der Primärfarben CM, CY und MY der Druckfarbe ohne Änderung ihres Farbtons unter Erzeugung virtueller Primärfarben CM', CY' und MY' der Druckfarbe, welche von dem Farbartendreieck der virtuellen Primärfarben R', G', B' eingeschlossen werden, erhöht wird.

5. Verfahren nach Anspruch 4, wobei die virtuelle Primärfarbe CY' der Druckfarbe auf der G'-B'-Seite des Farbartendreiecks der virtuellen Primärfarben R', G', B' liegt.

## Revendications

1. Procédé pour créer une base de données RGB à utiliser avec des dispositifs d'affichage couleur et des encres d'imprimerie, ledit procédé comprenant les étapes qui consistent à:
A. définir une échelle de chromaticité pour les primaires R, G, B d'un dispositif d'affichage couleur;
B. définir une échelle de chromaticité pour les primaires des encres d'impression;
C. définir une échelle de chromaticité triangulaire des primaires virtuelles R', G', B', qui comprend à la fois l'échelle de chromaticité des encres d'imprimerie et l'échelle de chromaticité des dispositifs d'affichage couleur, les primaires virtuelles R', G', B' étant situées sur les prolongements respectifs des trois droites reliant le point de chromaticité neutre aux primaires R, G, B de l'échelle de chromaticité des dispositifs d'affichage couleur; et
D. définir des données chromatiques, en termes de primaires virtuelles R', G', B', lesdites données chromatiques définies constituant une base de données RGB.

2. Procédé selon la revendication 1, dans lequel les primaires C, Y, M de l'échelle de chromaticité des encres d'imprimerie sont situées à l'intérieur de l'échelle de chromaticité triangulaire des primaires virtuelles R', G', B'.

3. Procédé selon la revendication 1, dans lequel les primaires C, Y, M de l'échelle de chromaticité des encres d'imprimerie sont situées sur les côtés de l'échelle de chromaticité triangulaire des primaires virtuelles R', G', B'.

4. Procédé selon la revendication 1, dans lequel la saturation de chacune des primaires CM, CY et MY des encres d'imprimerie est accrue sans modification de la teinte des primaires, pour créer les primaires virtuelles CM', CY' et MY' d'encre d'imprimerie, qui sont comprises dans l'échelle de chromaticité triangulaire des primaires virtuelles R', G', B'.

5. Procédé selon la revendication 4, dans lequel la primaire virtuelle CY' des encres d'imprimerie est située sur le côté G'-B' de l'échelle de chromaticité triangulaire des primaires virtuelles R', G', B'.
